# EUROPÄISCHE PATENTSCHRIFT

(11) **EP 0 470 321 B1**
(45) Veröffentlichungstag und Bekanntmachung des Hinweises auf die Patenterteilung: **09.03.1994**
(21) Anmeldenummer: 90810931.7
(22) Anmeldetag: 29.11.1990
(51) Int. Cl.: B65D 90/04

(54) **Tank und Verfahren zur Herstellung desselben**
Tank and method of manufacturing same
Réservoir et procédé pour sa fabrication

(30) Priorität: 09.08.1990 CH 2594/90
(43) Veröffentlichungstag der Anmeldung: 12.02.1992
(73) Patentinhaber: ADISA ENTWICKLUNGS AG, CH-8902 Urdorf (CH)
(72) Erfinder: Bachmann, Werner, CH-8968 Mutschellen (CH)
(74) Vertreter: Riederer, Conrad A., Dr.

(56) Entgegenhaltungen:
- EP-A- 0 122 980
- EP-A- 0 436 210
- CH-A- 471 728
- CH-A- 618 658
- DE-A- 3 739 453
- US-A- 4 739 895

## Beschreibung

Die Erfindung betrifft einen Tank mit einer Aussenwandung und einer Innenwandung, welche aus einem Laminat, bestehend aus einer Noppenfolie und einer Kunststoffschicht, gebildet ist, die Kunststoffschicht als Armierung ein Glasfasergewebe enthält, wobei die Ränder der Kunststoffschicht mit der Aussenwandung verbunden sind, um zwischen der Innenwandung und der Aussenwandung ein auf Leck überprüfbaren Raum zu bilden.

Durch die CH-PS 440 134 wird ein doppelwandiger Tank mit einer aus Stahl bestehenden Innenwandung und einer aus Kunststoff bestehenden Aussenwandung beschrieben. Zwischen der Innen- und der Aussenwandung befindet sich ein distanzhaltendes Drahtgitter oder Drahtgeflecht und eine als Unterlage für die Aussenwand dienende, auf dem Drahtgitter oder Drahtgeflecht angeordnete Folie. Als Folie dient beispielsweise eine Zellulosefolie von etwa 0,06 mm Dicke oder eine Aluminiumfolie von etwa 0,1 mm Dicke. Sie hat lediglich die Aufgabe als Unterlage für die relativ dicke Schicht aus glasfaserverstärktem Kunststoff zu dienen. Auf diese Weise wird ein doppelwandiger Tank gebildet. Die doppelte Wandung hat den Zweck, eine erhöhte Sicherheit gegen das Auslaufen der gespeicherten Flüssigkeit zu bieten. Ein Leckwarngerät ist vorgesehen, welches ein Leck in der Innenwandung anzeigt. Diese Ausgestaltung hat den Nachteil, dass sowohl ein Drahtgitter als auch eine Folie ausgelegt werden müssen. Weiter ist nachteilig, dass die Folie praktisch nur wenig zur Festigkeit der Wandung beiträgt. Diese muss daher aus einer relativ dicken Kunststoffschicht bestehen, die zusätzlich mit Glasfasern verstärkt ist. Diese Kunststoffschicht benötigt nicht nur sehr viel Kunststoff, sondern ihre Herstellung erfordert auch eine relativ komplizierte Spritzvorrichtung, welche eine Glasfaserschneideeinrichtung aufweist. Bei der Verwendung dieser Spritzvorrichtung fliegen immer Glasfaserstücke herum. Diese dringen leicht in die Haut ein und verursachen heftigen Juckreiz. Durch herumfliegende Glasfaserstücke wird das Arbeiten im Tankinnern sehr erschwert oder gar verunmöglicht. Die zitierte Patentschrift sieht denn auch bloss die Herstellung der Aussenwandung aus Kunststoff vor.

Das schweizerische Zusatzpatent 466 498 zum vorher zitierten Hauptpatent 440 134 sieht an Stelle eines Drahtgitters oder eines Drahtgeflechts ein Kunststoffgitter vor. Dieses besitzt den Vorteil, dass es wesentlich geschmeidiger und auch etwas dehnbar ist, so dass es leichter angebracht werden kann. Im übrigen weist aber der doppelwandige Tank gemäss dem Zusatzpatent die bereits beschriebenen Nachteile des Tankes gemäss dem Hauptpatent auf.

Das Schweizer Patent Nr. 471 728 betrifft einen doppelwandigen Tank mit einer aus Stahl bestehenden Innenwandung und einer aus Kunststoff bestehenden Aussenwandung, wobei zwischen der Innenwandung und der Aussenwandung ein Distanzhalter in Form einer Folie vorgesehen ist, die mit eingeprägten, distanzhaltenden Warzen versehen ist, welche auf der Innenwand abgestützt sind. Als Distanzhalterfolie wird ein 0,2 mm dickes Stahlblech oder ein Aluminiumblech vorgeschlagen. Gegenüber dem Tank gemäss der CH-PS 440 134 wird dadurch der Vorteil erreicht, dass die dünne Folie sich viel leichter auf die Oberfläche der Innenwand legen lässt als ein Drahtgitter, das bei einem Drahtdurchmesser, der zur Bildung eines passenden Hohlraumes ausreicht, recht steif ist. Im übrigen weist aber auch der doppelwandige Tank gemäss der CH-PS 471 728 die Nachteile der vorher beschriebenen Tanks auf. Es wird denn auch bloss die Herstellung einer aus Kunststoff bestehenden Aussenwandung, nicht aber die Herstellung einer aus Kunststoff bestehenden Innenwandung beschrieben.

Die CH-PS 480 243 zeigt eine flüssigkeitsdichte Auskleidung für einen Lagerbehälter, wobei im Bereich der senkrechten Seitenwand zwischen zwei Polyesterschichten eine Prägefolie angeordnet ist. Im Bereich des Bodens des Tanks wird jedoch als Zwischenschicht eine poröse Masse, z.B. Porenbeton, vorgesehen.

Die schweizerische Patentschrift 517 630 betrifft einen Flüssigkeitsbehälter mit nichtmetallischen Wänden. Dieser Flüssigkeitsbehälter zeichnet sich dadurch aus, dass zwecks Prüfung der Porenfreiheit der Behälterwände und zur Lokalisierung ggf. auftretender Poren mittels eines Funkeninduktors an oder auf einer der Wände stromleitende Mittel angeordnet sind. Die Behälteraussenwand besteht vorzugsweise aus Beton. Als stromleitendes Mittel dient eine mit Warzen oder Längssicken versehene Aluminiumfolie von 0,02 bis 0,1 mm Dicke. Dank der Warzen oder Längssicken wird ein Leckprüfraum zwischen Aussenwandung und der Innenwandung gebildet. Als Material für die Innenwandung dient ein glasfaserverstärkter Kunststoff, z.B. Polyester, Polyurethan oder ein thermoplastischer Kunststoff, welcher die notwendige Stabilität, Druckfestigkeit und Korrosionsbeständigkeit gegenüber der einzubringenden Flüssigkeit aufweist. Es ist also die relativ dicke und steife Kunststoffschicht und nicht die metallische Folie, welche der Innenwandung die notwendige Festigkeit verleiht. Entsprechendes gilt auch für den Gegenstand der schweizerischen Patentschrift 618 658. Anstelle einer Aluminiumfolie mit Warzen oder Längssicken wird jedoch ein Packpapier vorgeschlagen, das mit Erhebungen und Vertiefungen versehen ist. Auf dieses Packpapier wird vorerst eine Schicht einer Beschichtungsfarbe aufgetragen, die Glasfasern mit einer Faserlänge von 2,5 bis 5 mm enthält. Nach einer vierundzwanzigstündigen Trockenzeit der ersten Schicht wird eine zweite, normalerweise farblose Schicht aufgetragen. Für die Festigkeit der Innenwandung ist wiederum in erster Linie die mit Glasfasern verstärkte Schicht massgebend, während das mit Erhebungen und Vertiefungen versehene Packpapier praktisch nichts zur Festigkeit beiträgt. Es ist klar, dass unter diesen Umständen die Kunststoffschicht relativ dick sein muss. Dies hat zur Folge, dass zu deren Herstellung relativ viel Zeit benötigt wird, insbesondere wenn nach dem Anbringen der ersten Schicht immer eine Ruhepause von 24 Stunden eingeschaltet werden muss. Nachteilig ist ferner, dass der Kunststoffverbrauch zur Herstellung einer dicken Kunststoffschicht relativ gross ist.

In der US-PS 4 739 895 wird ein doppelwandiger Tank beschrieben, bei welchem die Innenwandung aus aneinander gereihten Noppenfolien und eine diese bedeckende Kunststoffschicht gebildet wird. Zwischen der Innenwandung und der Aussenwandung wird dadurch ein auf Leck überprüfbarer Raum gebildet. Die Noppenfolie selbst besitzt die für die Innenwandung notwendige Festigkeit. Mehrere Noppenfolien sind im Bereich ihrer Ränder mittels einer faserverstärkten Kunststoffschicht miteinander verbunden. Die Ränder des Ganzen sind ebenfalls mit einer faserverstärkten Kunststoffschicht mit der Aussenwandung verbunden. Das Ganze ist mit einer dünnen Schutzschicht aus Kunststoff bedeckt. Im Gegensatz zum vorher beschriebenen Stand der Technik dienen also die Noppenfolien nicht nur als Träger einer Kunststoffschicht, welche erst der Innenwandung die notwendige Festigkeit verleiht, sondern die Noppenfolien selbst geben der Innenwandung die notwendige Festigkeit. Die Kunststoffschicht dient dabei in erster Linie als Schutzschicht gegen Einwirkungen des Tankinhalts auf die Noppenfolien. Die so hergestellte Innenwandung benötigt nur wenig Kunstharz zu ihrer Herstellung, weil für den grössten Teil der Innenwandung lediglich eine etwa 1 mm dicke Kunststoffschicht als Schutzschicht notwendig ist. Nur die Verbindungsstellen zwischen den Noppenfolien sind etwas dicker ausgestaltet und zudem mit einem Glasfasergewebe verstärkt, um dort der Innenwandung die notwendige Festigkeit zu verleihen.

Die US-PS 4 739 895 beschreibt auch ein Verfahren zur Herstellung des doppelwandigen Tanks. Dabei wird so verfahren, dass die Innenseite der Wandung, die gegebenenfalls noch mit einem Schutzanstrich aus Kunststoff versehen wurde, mit Noppenfolienbahnen ausgelegt wird. Das Auslegen erfolgt vorteilhaft so, dass sich die einzelnen Bahnen überlappen. Der Bereich der Randflächen der Folienbahnen wird dann mit Kunstharz vorbeschichtet. Auf die noch flüssige Kunstharzschicht wird ein Glasfasergewebeband aufgelegt und in die Kunstharzmasse eingerollt. Dadurch entsteht ein auf Leck überprüfbarer Raum zwischen der Aussenwandung und der Innenwandung. Die gesamte mit Noppenfolien ausgelegte Fläche wird dann im Spritzverfahren mit einer dünnen Kunstharzbeschichtung überdeckt. Nach dem Aushärten erfolgt noch eine Porenprüfung mit dem Funkendetektor. Der so hergestellte Tank hat den Nachteil, dass sich im Betrieb bei einer Verformung der Innwandung Risse entstehen können, dass also die Innenwandung leck wird.

Die DE-A-37 39 453 offenbart eine mehrschalige, auf Leckagen kontrollierbare Auskleidung unterirdischer Tanklager. Diese Auskleidung besteht mindestens aus sechs Schichten, nämlich aus einer äusseren Betonschicht, einer durchlässigen Drainageschicht, einer äusseren Abdichtungsschicht, einer durchlässigen Textilzwischenschicht und mehreren Lagern von Epoxidharz mit zur Verstärkung eingelegtem Glasseidengewebe. Diese Auskleidung eignet sich nicht für die üblichen Tanks und ist teuer in der Herstellung. Zur Herstellung jeder Lage muss Epoxidharz aufgetragen, das Glasfasergewebe aufgelegt und mit einer Rolle gut in das flüssige Harz eingebettet werden. Bevor die nächste Lage hergestellt werden kann, muss eine Aushärtung der vorherigen Lage erfolgen, wie dies vorher unter Bezug auf die CH-A-618 658 beschrieben wurde. Dieses Verfahren ist nicht nur langwierig und teuer, sondern hat auch den Nachteil, dass die Lagen nicht gut aufeinander haften und leicht delaminieren.

Es ist daher Aufgabe der vorliegenden Erfindung, die Konstruktion des Tankes so zu verbessern, dass beim Gebrauch des Tanks zur Lagerung von Flüssigkeiten Leckagen vermieden werden. Die Innenwandung soll eine hohe Eigenstabilität und Beulfestigkeit haben, aber trotzdem mit einem relativ geringem Kunstharzverbrauch hergestellt werden können.

Erfindungsgemäss wird dies bei einem Tank der eingangs erwähnten Art dadurch ereicht, dass die Armierung der Kunststoffschicht aus einem mehrschichtigen Glasgewebe besteht, dessen übereinander angeordnete Schichten aus Schuss- und Kettenfäden durch Schuß- und/oder Kettenfäden, die von einer Schicht in eine andere Schicht übergehen, miteinander verbunden sind. Wie nachher noch unter Bezugnahme auf die Zeichnung näher ausgeführt wird, wird dadurch eine Rissbildung in der Innenwandung im Betrieb vermieden. Zur Herstellung der Innenwandung wird relativ wenig Kunstharz benötigt. Die Innenwandung besitzt eine hohe Beulfestigkeit und in allen Richtungen eine hohe Zugfestigkeit. Die Innenwandung ist auch in allen Richtungen flexibel. Auch ist die Füllfestigkeit hoch, denn auch bei hoher Druckbeanspruchung werden die Noppen des Noppenblechs nicht zerquetscht. Einem Zerquetschen wirkt die grosse Zugfestigkeit der Fäden des Glasfasergewebes entgegen.

Zweckmässigerweise überlappen die einzelnen Noppenfolien einander an den Verbindungsstellen. Dadurch wird eine besonders gute Verbindung der Noppenfolien gewährleistet. Ausserdem wird dadurch die Herstellung der Innenwandung erleichtert, weil die Anpassungsarbeiten auf ein Minimum beschränkt werden können.

Vorteilhaft sind die Noppenfolien mindestens auf einer Seite geprimert. Durch diese Primerung wird die Haftung der Schutzschicht wesentlich verbessert. Dadurch wird die Festigkeit des Laminats erheblich erhöht. Vorteilhaft ist die Noppenfolie eine Aluminiumfolie mit einer Dicke von 0,15 bis 0,3 mm. Folien solcher Dicke sind relativ leicht und lassen sich auch leicht biegen. Dadurch wird deren Verarbeitung bei der Herstellung der Innenwandung erheblich erleichtert. Als besonders vorteilhaft hat sich eine Aluminiumnoppenfolie mit einer Dicke von 0,2 mm erwiesen. Eine solche Folie besitzt die gewünschte Festigkeit und lässt sich relativ leicht verarbeiten. Es ist aber auch möglich für gewisse Anwendungen eine Noppenfolie aus Papier oder Kunststoff zu benützen. Die auf die Noppenfolien aufgetragene Kunststoffschicht besteht vorteilhaft aus Epoxid. Die Verwendung von Epoxid hat gegenüber der Verwendung von Polyester den Vorteil, dass keine besonders lästige Geruchsimmissionen entstehen.

Die Erfindung betrifft auch ein Verfahren zur Herstellung eines Tanks. Dieses Verfahren ist dadurch gekennzeichnet, dass die Noppenfolien auf der Innenseite der Aussenwandung angeordnet werden, dass die Noppenfolien und die zukünftigen Verbindungsstellen der Innenwandung mit der Aussenwandung mit einer Schicht Kunstharz vorbeschichtet werden, dass das mehrschichtige Glasfasergewebe auf die noch flüssige Kunststoffschicht aufgelegt und eingerollt wird und dass dann eine weitere Kunstharzschicht aufgetragen wird. Dieses Verfahren ist relativ einfach und kann in kurzer Zeit durchgeführt werden.

Es hat sich auch als vorteilhaft erwiesen, dass noch während des plastischen Zustandes der Kunststoffschicht ein Unterdruck im Raum zwischen der Aussenwandung und der Noppenfolie erzeugt wird und bis zum Aushärten des Kunstharzes belassen wird. Es ist auch möglich, bereits nach dem Auslegen der Noppenfolien mit der Erzeugung des Unterdruckes zu beginnen. Da die Noppenfolien relativ dick sind, liegen sie beim Aufbringen an der Innenseite der Aussenwandung nicht überall an. Dies ist besonders dann der Fall, wenn die Noppenfolien beim Einführen durch ein Mannloch etwas verformt wurden. Entsprechende Probleme ergeben sich auch im Bereich der gewölbten kappenförmigen Enden eines zylindrischen Tanks. Dadurch aber, dass nach der Verbindung der einzelnen Noppenfolien und der Abdichtung an den Rändern ein Vakuum angelegt wird, presst der atmosphärische Druck die Noppenfolien fest an die bestehende Tankwandung. Da sich die Kunstharzschicht an den Verbindungsstellen noch in plastischem Zustand befindet, sind Relativverschiebungen zwischen den Noppenfolien und der bestehenden Tankwandung noch möglich. Die Innenwandung kann sich also genau der Aussenwandung anpassen. Der Zustand, in welchem ein Vakuum zwischen der Innenwandung und der Aussenwandung besteht, entspricht auch dem späteren Betriebszustand des Tanks.

Gemäss einer vorteilhaften Ausführungsform des Verfahrens wird das Kunstharz mit einem luftfreien Spritzverfahren aufgetragen. Dieses Spritzverfahren eignet sich besonders gut für Arbeiten im Innern eines Tanks.

Bei Tanks mit Verstärkungsringen können die Noppenfolien über die Verstärkungsringe hinweggezogen werden. Um dies zu erreichen, können die Räume zwischen den Profilbalken derart mit einer Füllmasse ausgefüllt werden, dass der Verstärkungsquerschnitt eine etwa trapezförmige Form aufweist, wobei sich die längere Seite des Trapezes bei der Aussenwandung befindet.

Ein Ausführungsbeispiel der Erfindung wird nun unter Bezugnahme auf die Zeichnung näher beschrieben. Es zeigt:
- Fig. 1: einen Schnitt durch einen im Erdboden eingelassenen zylindrischen Tank,
- Fig. 2: die Ueberbrückung eines Verstärkungsrings,
- Fig. 3: einen Querschnitt durch ein zweischichtiges Gewebe,
- Fig. 4: eine Reproduktion eines zweischichtigen Gewebes gemäss Fig. 3,
- Fig. 5: einen Querschnitt durch ein einfaches Gewebe, wie es gemäss dem Stand der Technik Anwendung findet,
- Fig. 6: ein Schnitt durch eine Innenwandung gemäss dem Stand der Technik,
- Fig. 7: das Biegeverhalten der Innenwandung von Fig. 6, und
- Fig. 8: eine schematische Darstellung der Innenwandung, welche gemäss der Erfindung mit einem mehrschichtigem Gewebe verstärkt ist.

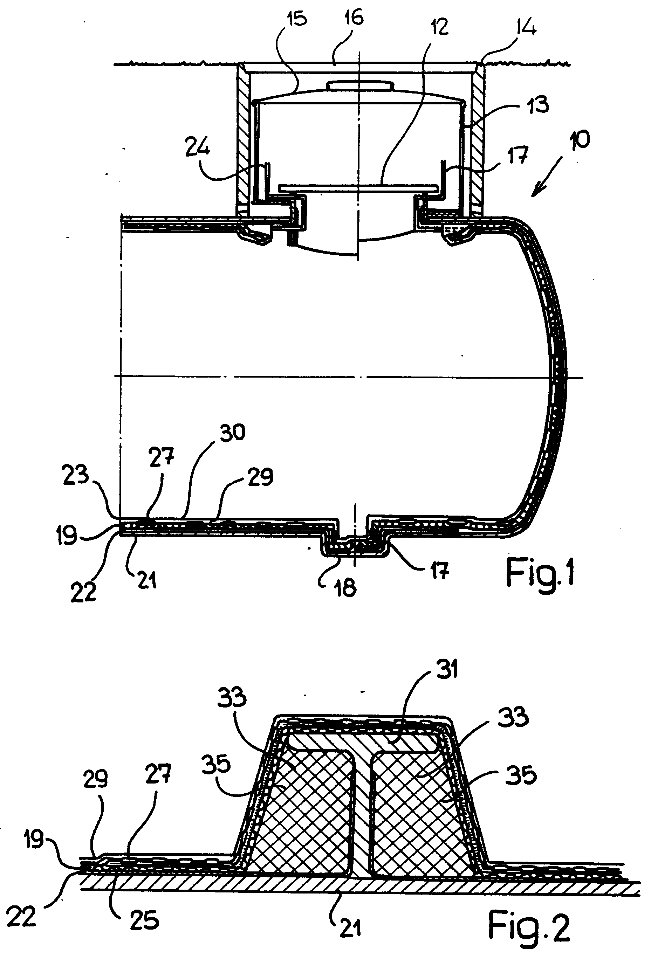

Ein Ausführungsbeispiel der Erfindung wird am Beispiel des in Fig. 1 dargestellten zylindrischen Tanks näher erläutert. Die Erfindung ist jedoch nicht auf irgendeine Tankform begrenzt. Sie eignet sich vielmehr für alle Tankformen. Der Tank 10 besitzt ein Mannloch 12, dass von einem Kunststoffschacht 13 und einem Zementrohrschacht 14 umgeben ist. Auf dem Kunststoffschacht 13 befindet sich der Kunststoffdeckel 15. Auf dem Zementrohrschacht 14, befindet sich ein Deckel 16.

Das Saugrohr 17 führt bis zur tiefsten Stelle, der sogenannten Tasse 18. Das Saugrohr 17 dient der Absaugung etwaiger Leckflüssigkeit aus dem Hohlraum 19, der insbesondere in Fig. 2 gut ersichtlich ist. Dieser Hohlraum 19 befindet sich zwischen der Aussenwandung 21 und der Innenwandung 23. Die Innenwandung 23 besteht aus einem Laminat. Dieses Laminat wird durch die Noppenfolie 25 (Fig. 2), vorzugsweise Aluminiumnoppenfolie, und die Kunststoffschicht 27, vorzugsweise Epoxid, in welcher ein mehrschichtiges, z.B. zweischichtiges Glasfasergewebe eingebettet ist, gebildet. Die Noppenfolie 25 besitzt vorteilhaft bereits eine genügende Festigkeit, um die Innenwandung zu bilden. Zu diesem Zweck genügt eine Folienstärke von etwa 0,15 bis 0,3 mm, vorzugsweise 0,2 mm. Im Handel sind keine Aluminiumnoppenfolien erhältlich, die gross genug bemessen wären, um die ganze Innenwandung zu bilden. Es wäre praktisch auch kaum möglich, eine solche Noppenfolie durch das Mannloch in das Tankinnere hineinzuführen. Es müssen daher zur Herstellung der Innenwandung verschiedene Folienbahnen nebeneinander gelegt werden. In gewissen Fällen kann auch eine Noppenfolie aus Papier oder Kunststoff Anwendung finden, weil schon durch das mehrschichtige Glasfasergewebe eine hohe Eigenstabilität und Zugfestigkeit des Laminats erzeugt wird.

Zur Herstellung der Innenwandung 23 wird so verfahren, dass an der Innenseite der Aussenwandung 21, die gegebenenfalls mit einem Schutzanstrich 22 versehen wurde, Noppenfolienbahnen 25 ausgelegt werden, wobei sich die einzelnen Bahnen zweckmässigerweise überlappen. Die Befestigung der Bahnen an der Tankwandung kann beispielsweise mit einem doppelseitig klebenden Klebeband erfolgen. Hierauf wird auf die Noppenfolien 25 eine Kunstharzschicht 27, z.B. Epoxidharz, aufgebracht. Auf die noch flüssige Kunstharzschicht wird das zweischichtige Glasfasergewebe 29 aufgelegt und in die Kunstharzmasse eingerollt. In gewissen Bereichen, normalerweise im Bereich des Mannlochs, erfolgt eine Verbindung des über den Rand der Noppenfolie 25 hinausreichenden Glasfasergewebes 29 mit der Aussenwandung 21 des Tanks. Auf diese Weise wird der auf Leck überprüfbare Hohlraum 19 zwischen der Aussenwandung 21 und der Innenwandung 23 geschaffen.

Von Bedeutung bei diesem Verfahren ist, dass noch vor dem Aushärten des Kunstharzes ein Vakuum von etwa -0,8 bar im Hohlraum 19 erzeugt wird. Zu diesem Zweck kann eine nicht gezeigte Vakuumpumpe an das Saugrohr 17 angeschlossen werden. Die Messung des Vakuums kann durch den Anschluss eines Messinstrumentes an die Messleitung 24 erfolgen. Das Vakuum hat zur Folge, dass sich die halbfertige Innenwandung 23, also die miteinander verbundenen Noppenfolien 25, überall satt an die Innenseite der Aussenwandung 21 anlegt. Nach dem Aushärten kann noch auf übliche Weise eine Porenprüfung mit einem Funkendetektor erfolgen. Gegebenenfalls wird dann noch eine weitere, elektrisch leitende Deckschicht 30 angebracht, um eine Entzündungsgefahr durch elektrostatische Entladungen bei der Lagerung von feuergefährlichen Flüssigkeiten zu vermeiden.

Fig. 2 zeigt ein Beispiel einer Ueberbrückung eines Verstärkungsringes 31 durch die Innenwandung 23. Auf beiden Seiten des einen T-förmigen Querschnitt aufweisenden Verstärkungsrings 31 sind die Räume 33 zwischen den Profilbalken derart mit einer Füllmasse 35 ausgefüllt, dass der Verstärkungsquerschnitt eine etwa trapezförmige Form aufweist. Die längere Seite des Trapezes befindet sich dabei bei der Aussenwandung 21. Die Noppenfolie 25 ist über die so gestaltete Verstärkung bestehend aus Verstärkungsring 31 und Füllmasse 35 hinweggezogen. Entsprechendes gilt auch für das zweischichtige Glasfasergewebe 29.

Bei der vorliegenden Erfindung spielt das mehrschichtige Gewebe 29 eine besondere Rolle. Dies wird nachfolgend näher erläutert.

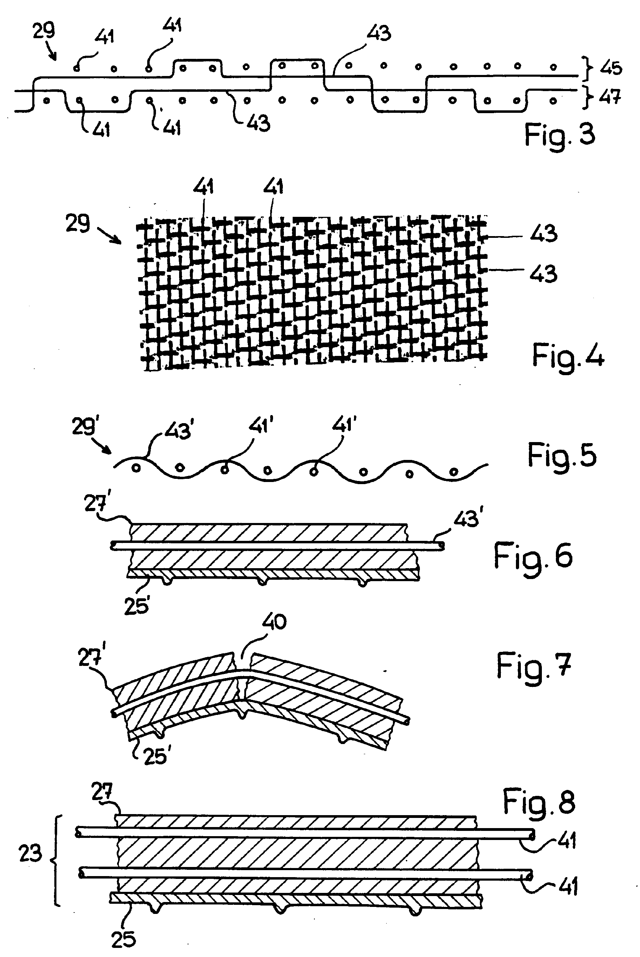

Die Figuren 3 und 4 zeigen ein Ausführungsbeispiel eines zweischichtigen Gewebes 29. Wie Fig. 3 zeigt, sind zwei Lagen von Schussfäden 41 und Kettenfäden 43 übereinander angeordnet. Das Gewebe 29 weist also zwei Schichten 45, 47 auf. Ausser der in den Figuren 3 und 4 gezeigten Bindung sind noch viele andere Bindungsarten möglich. Von Bedeutung ist dabei, dass durch das Gewebe der nachfolgend beschriebene Verstärkungseffekt erreicht wird. Der durch das zweischichtige Gewebe erreichte Verstärkungseffekt ist am besten verständlich, wenn zuerst das Verhalten einer Kunststoffschicht betrachtet wird, die in bekannter Art und Weise durch ein einfaches Gewebe 29', verstärkt ist. So zeigt Fig. 6 eine solche auf einer Noppenfolie 25' angeordnete, durch ein einfaches Gewebe 29' verstärkte Kunststoffschicht 27'. Dieses Laminat neigt bei einer Verformung, wie sie in Fig. 7 gezeigt ist, leicht zur Bildung von Rissen 40 in der Kunststoffschicht 27', welche dann Leckagen in der Innenwandung des Tanks verursachen können.

Wird hingegen bei der Herstellung der Innenwandung ein zweischichtiges Gewebe 29 verwendet, so sind grundsätzlich immer zwei übereinander angeordnete Fäden 41 bzw. 43 vorhanden, wie dies schematisch in Fig. 8 dargestellt ist. Dadurch wird die Biegefestigkeit stark erhöht, sodass eine Rissbildung, wie sie in Fig. 7 gezeigt ist, vermieden wird. Die für die Fäden des Gewebes verwendeten Glasfasern weisen eine sehr hohe Zugfestigkeit auf. Damit eine optimale Verstärkung der Kunststoffschicht durch das zweischichtige Gewebe erreicht wird, spielt es auch eine Rolle, dass das Gewebe gut verharzt werden kann. Zweckmässigerweise bestehen daher Schuss- und Kettenfäden 41, 43 aus einer Vielzahl von dünnen Glasfasern von etwa 0,02 bis 0,05 mm Durchmesser. Sie lassen sich daher gut durch Kunstharz benetzen. Das Gewebe 29 lässt sich daher sehr gut mit Kunstharz füllen. Darüber hinaus ist das Gewebe sehr flexibel und lässt sich daher gut auslegen.

Als besonders zweckmässig hat sich ein zweischichtiges Glasfaserngewebe mit einem Quadratmetergewicht von 450g erwiesen. Ein solches Gewebe kann auch gut über Kopf laminiert werden, ohne dass eine Gefahr besteht, dass es herunterfällt. Dies ist von besonderer Bedeutung bei Sanierungsarbeiten von bestehenden Tankanlagen.

Um einen Tank gemäss der Erfindung zu testen wurde folgender Versuch durchgeführt: Als Testobjekt diente ein 20'000 l fassender zylindrischer Tank mit einer Innenwandung aus einem Laminat aus Aluminiumnoppenblech von 0,2 mm und einer mit einem zweischichtigen Glasfasergewebe von 450 g/m2 verstärkten Kunststoffschicht. Dieser Tank wurde bis auf eine Höhe von 1,60 m mit Wasser gefüllt. Auch der Hohlraum 19 zwischen der Innenwandung und der Aussenwandung wurde auf die gleiche Höhe mit Wasser gefüllt. Anschliessend wurde das Wasser aus dem Tank abgepumpt, aber das Wasser im Hohlraum 19 belassen. Der Tank konnte vollständig entleert werden, ohne dass sich eine Beule ausbildete. Nach dem Entleeren hatte sich im Hohlraum 19 über dem Wasserspiegel ein Unterdruck von 0,0072 bar gebildet. Erst nachdem in den Hohlraum Luft eingelassen wurde, konnte sich am Fuss der Innenwandung eine in Längsrichtung verlaufende Beule mit einer Breite von etwa 50 cm ausbilden. Nach dem Entstehen der Beule lag ein Druck von 0,05 bar auf der Innenwandung vor. Dieser Druck entspricht einer Wassersäule von etwa 50 cm oder einer Brennstoffsäule von etwa 70 cm.

Nach der Ausbildung der Beule im Tankboden wurde diese durch drei Personen begangen. Ferner wurde auf dem Hochpunkt der Beule eine Leiter abgestellt, mit welcher eine 85 kg schwere Person den Tank durch das Mannloch verliess. Auch wurde ein Gabelschlüssel mit einer Masse von 600 g aus einer Höhe von 3 m mit der Spitze nach unten auf die Beule fallengelassen. Mit dem Herumlaufen auf der Beule und mit der belasteten Leiter konnte kein Schaden an der Innenwandung erzeugt werden. Durch den fallengelassenen Gabelschlüssel wurde lediglich eine lokale Stauchung von etwa 1 cm² erzeugt.

## Patentansprüche

1. Tank mit einer Aussenwandung (21) und einer Innenwandung (23), welche aus einem Laminat, bestehend aus einer Noppenfolie (25) und einer Kunststoffschicht (27), gebildet ist, wobei die Kunststoffschicht als Armierung ein Glasfasergewebe enthält, und die Ränder der Kunststoffschicht (27) mit der Aussenwandung (21) verbunden sind, um zwischen der Innenwandung (23) und der Aussenwandung (21) einen auf Leck überprüfbaren Raum (19) zu bilden, dadurch gekennzeichnet, dass die Armierung der Kunststoffschicht (27) aus einem mehrschichtigen Glasfasergewebe (29) besteht, dessen übereinander angeordnete Schichten aus Schuss- und Kettenfäden (41, 43) durch Schuß- und/oder Kettenfäden, die von einer Schicht in eine andere Schicht übergehen, miteinander verbunden sind.

2. Tank nach Anspruch 1, dadurch gekennzeichnet, dass das Glasfaserngewebe zweischichtig ist.

3. Tank nach Anspruch 1, oder 2, dadurch gekennzeichnet, dass die Schuss- und Kettenfäden (41, 43) durch eine Vielzahl von dünnen Glasfasern gebildet sind.

4. Tank nach einem der Ansprüche 1 bis 3, dadurch gekennzeichnet, dass die einzelnen Noppenfolien (25) einander an den Verbindungsstellen überlappen.

5. Tank nach einem der Ansprüche 1 bis 4, dadurch gekennzeichnet, dass die Noppenfolien (25) mindestens einseitig, vorzugsweise aber beidseitig geprimert sind.

6. Tank nach einem der Ansprüche 1 bis 5, dadurch gekennzeichnet, dass die Noppenfolien (25) Aluminiumfolien mit einer Dicke von 0,15 bis 0,3 mm, vorzugsweise 0,2 mm, sind.

7. Tank nach einem der Ansprüche 1 bis 5, dadurch gekennzeichnet, dass die Noppenfolien (25) Papier- oder Kunststofffolien sind.

8. Tank nach einem der Ansprüche 1 bis 7, dadurch gekennzeichnet, dass die Kunststoffschicht (27) aus Epoxid besteht.

9. Verfahren zur Herstellung eines Tanks mit einer Aussenwandung und einer Innenwandung, welche aus einem Laminat, bestehend aus einer Noppenfolie und einer Kunststoffschicht gebildet ist, wobei die Kunststoffschicht mit einer ein Glasfasergewebe enthaltenden Armierung versehen ist und die Ränder der Kunststoffschicht mit der Aussenwandung verbunden werden, um zwischen der Innen- und Aussenwandung einen auf Leck überprüfbaren Raum zu bilden, dadurch gekennzeicht, dass die Noppenfolien an der Innenseite der Aussenwandung angeordnet werden, dass die Noppenfolien und die zukünftigen Verbindungsstellen der Innenwandung mit der Aussenwandung mit einer Schicht Kunstharz vorbeschichtet werden, dass die Armierung, die aus einem mehrschichtigen aus übereinander angeordneten Schuss- und Kettenfäden gebildeten Glasfasergewebe besteht, dessen Schichten durch Schuß- und/oder Kettenfäden, die von einer Schicht in eine andere übergehen, miteinander verbunden sind, auf die noch flüssige Kunstharzschicht aufgelegt und dann eingerollt wird, und dass noch während des plastischen Zustandes der Kunstharzschicht ein Unterdruck im Raum (19) zwischen Aussenwandung (21) und Noppenfolien (25) erzeugt wird und mindestens bis zum Aushärten des Kunstharzes belassen wird.

10. Verfahren nach Anspruch 9, dadurch gekennzeichnet, dass nach der Aushärtung der Kunstharzschicht, diese mit einem Hochspannungsgerät auf eventuelle Fehlstellen überprüft wird.

11. Verfahren nach Anspruch 10, dadurch gekennzeichnet, dass nach der Ueberprüfung eine weitere Kunstharzschicht aufgetragen wird.

12. Verfahren nach einem der Ansprüche 9 bis 12, dadurch gekennzeichnet, dass das Kunstharz mit einem luftfreien Spritzverfahren aufgetragen wird.

## Claims

1. Tank having an outer wall (21) and an inner wall (23), which is formed as a laminate comprising a dimpled foil and a plastics layer (27), wherein said plastics layer has as reinforcement material a glass-fiber fabric and wherein the edges of the plastics layer (27) are bound to the outer wall (21) in order to define a leakage test space (19), characterized in that the reinforcement material of the plastics layer (27) consists of a multi-layer glass fiber fabric (29), whose superposed layers of weft and warp threads are interlocked by weft and/or warp threads extending from one layer into another layer.

2. Tank according to claim 1, characterized in that the glass fiber fabric has two layers.

3. Tank according to claim 1 or 2, characterized in that the weft and warp threads (41,43) are formed by a plurality of thin glassfibers.

4. Tank according to one of the claims 1 to 3, characterized in that the dimpled foils (25) are overlapping one another at the connecting regions.

5. Tank according to one of the claims 1 to 4, characterized in that the dimpled foils (25) are prime coated on at least one surface, preferably on both surfaces.

6. Tank according to one of the claims 1 to 5, characterized in that the dimpled foils (25) are aluminum foils having a thickness of 0.15 to 0.3 mm, preferably 0.2 mm.

7. Tank according to one of the claims 1 to 3, characterized in that the dimpled foils (25) are paper or plastics foils.

8. Tank according to one of the claims 1 to 3, characterized in that the plastics layer (27) consists of an epoxy resin.

9. A method to construct a tank having an outer wall (21) and an inner wall (23), which is formed as a laminate comprising a dimpled foil and a plastics layer (27), wherein said plastics layer has as reinforcement material a glass-fiber fabric and wherein the borders of the plastics layer (27) are bound to the outer wall (21) in order to define a leakage test space (19), characterized in that the dimpled foils are placed on the inner surface of the outer wall (21), that the dimpled foils and the future connecting regions of the inner wall (23) to the outer wall (21) are pre-coated with a resin layer, that the reinforcement material consisting of a multi-layer glass-fiber fabric (29), whose superposed layers of weft and warp threads are interlocked by weft and/or warp threads extending from one layer into another layer, is placed on the still liquid resin layer and then rolled in, that still during the uncured state of the resin layer a vacuum is applied in the space (19) between the outer wall (21) and the dimpled foils (25) and that said vacuum is maintained at least until the resin layer has hardened.

10. Method according to claim 9, characterized in that after curing of the resin layer the same is leak-tested with a high-voltage apparatus.

11. Method according to claim 10, characterized in that after the leak test a further resin layer is applied.

12. Method according to one of the claims 9 to 11, characterized in that the resin is applied by an air-free spray process.

## Revendications

1. Réservoir possédant une paroi extérieure (21) et une paroi intérieure (23), qui est formée d'un stratifié constitué d'une feuille à boutons (25) et d'une couche de matière synthétique (27), la couche de matière synthétique contenant comme armature un tissu de fibres de verre et les bords de la couche de matière synthétique (27) étant assemblés à la paroi extérieure (21) afin de former entre la paroi intérieure (23) et la paroi extérieure (21) un espace (19) où l'on puisse contrôler les fuites, **caractérisé** en ce que l'armature de la couche de matière synthétique (27) est constituée d'un tissu de fibres de verre multiplis (29) dont les plis superposés, constitués de fils de trame et de chaîne (41, 43), sont mutuellement assemblés par des fils de trame et/ou de chaîne qui passent d'un pli dans l'autre.

2. Réservoir selon la revendication 1, **caractérisé** en ce que le tissu de fibres de verre est à deux plis.

3. Réservoir selon la revendication 1 ou 2, **caractérisé** en ce que les fils de trame et de chaîne (41, 43) sont formés par une multiplicité de minces fibres de verre.

4. Réservoir selon l'une quelconque des revendications 1 à 3, **caractérisé** en ce que les feuilles à boutons individuelles (25) se chevauchent mutuellement aux points d'assemblage.

5. Réservoir selon l'une quelconque des revendications 1 à 4, **caractérisé** en ce que les feuilles à boutons (25) sont enduites d'un apprêt au moins d'un côté, mais de préférence des deux côtés.

6. Réservoir selon l'une quelconque des revendications 1 a 5, **caractérisé** en ce que les feuilles à boutons (25) sont des feuilles d'aluminium d'une épaisseur de 0,15 à 0,3 mm, de préférence 0,2 mm.

7. Réservoir selon l'une quelconque des revendications 1 a 5, **caractérisé** en ce que les feuilles à boutons (25) sont des feuilles de papier ou de matière synthétique.

8. Réservoir selon l'une quelconque des revendications 1 à 7, **caractérisé** en ce que la couche de matière synthétique (27) est réalisée en résine époxy.

9. Procédé de fabrication d'un réservoir possédant une paroi extérieure et une paroi intérieure, qui est formée d'un stratifié constitué d'une feuille à boutons et d'une couche de matière synthétique, la couche de matière synthétique étant pourvue d'une armature contenant un tissu de fibres de verre et les bords de la couche de matière synthétique étant assemblés à la paroi extérieure afin de former entre la paroi intérieure et la paroi extérieure un espace où l'on puisse contrôler les fuites, **caractérisé** en ce que les feuilles à boutons sont disposées sur le côté intérieur de la paroi extérieure, en ce que les feuilles à boutons et les futurs points d'assemblage de la paroi intérieure avec la paroi extérieure sont préalablement enduits d'une couche de résine synthétique, en ce que l'armature, consistant en un tissu de fibres de verre multiplis constitué de fils de trame et de chaîne superposés,et dont les plis sont mutuellement assemblés par des fils de trame et/ou de chaîne qui passent d'un pli dans l'autre, est appliquée sur la couche de résine synthétique encore liquidepuis cintrée, et en ce qu'à l'état encore plastique de la couche de résine synthétique, une dépression est produite dans l'espace (19) entre la paroi extérieure (21) et les feuilles à boutons (25), et y est maintenue au moins jusqu'au durcissement de la résine synthétique.

10. Procédé selon la revendication 9, **caractérisé** en ce qu'à la suite du durcissement de la couche de résine synthétique, on contrôle ses éventuels défauts à l'aide d'un appareil à haute tension.

11. Procédé selon la revendication 10, **caractérisé** en ce qu'à la suite du contrôle, on applique une couche supplémentaire de résine synthétique.

12. Procédé selon l'une quelconque des revendications 9 à 12, **caractérisé** en ce que la résine synthétique est appliquée au moyen d'un procédé de projection sans air.
